# EUROPEAN PATENT SPECIFICATION

(11) **EP 0 951 013 B1**
(45) Date of publication and mention of the grant of the patent: **07.05.2003**
(21) Application number: 98307133.3
(22) Date of filing: 04.09.1998
(51) Int. Cl.: G11B 7/135, G11B 7/12, G02B 17/08

(54) **Optical pickup having catadioptric objective lens**
Optischer Lesekopf mit katadioptrischer Objektivlinse
Tête de lecture optique avec lentille d'objectif catadioptrique

(30) Priority: 14.04.1998 KR 9813317
(43) Date of publication of application: 20.10.1999
(73) Proprietor: Samsung Electronics Co., Ltd., Suwon-city, Kyungki-do (KR)
(72) Inventor: Chung, Chong-sam, Sungnam-city, Kyungki-do (KR); Lee, Chul-woo, Pundang-gu, Sungnam-city, Kyungki-do (KR); Cho, Kun-ho, Suwon-city, Kyungki-do (KR); Lee, Yong-Hoon, Suwon-city, Kyungki-do (KR)
(74) Representative: Chugg, David John

(56) References cited:
- EP-A- 0 294 902
- EP-A- 0 766 115
- US-A- 5 125 750
- US-A- 5 689 480

## Description

The present invention relates to an optical pickup having a catadioptric objective lens.

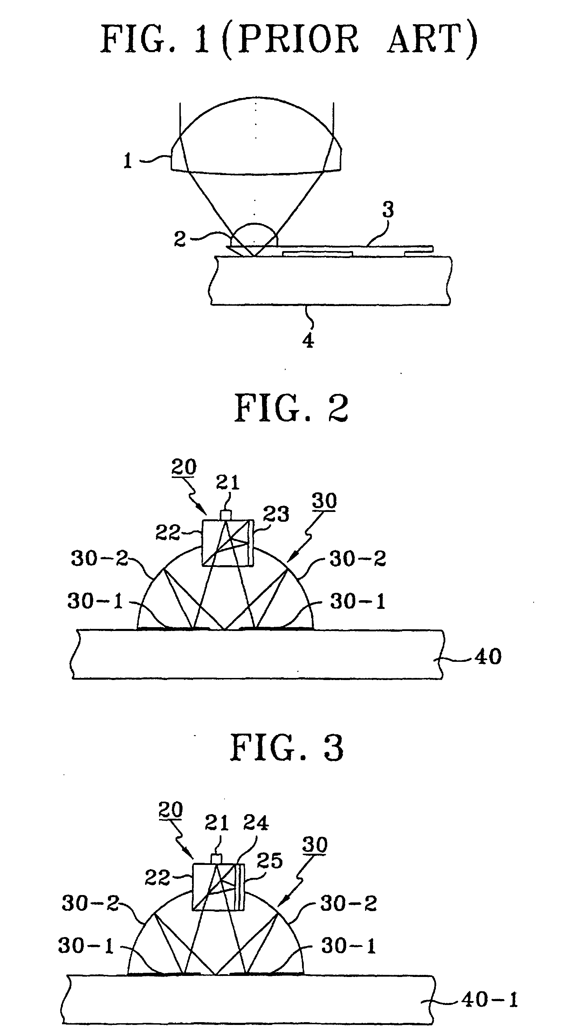

There are various methods under study in order to increase a recording capacity for an optical recording and reproducing apparatus, in which the basic schemes are to reduce a size of a focused spot by decreasing a wavelength of light and increasing a numerical aperture (NA) of an objective lens. An optical focusing system for increasing the NA to reduce the size of a focused spot will be described below with reference to Figure 1.

An optical focusing system shown in Figure 1 uses a near field to reduce the size of a focused spot, which includes a conventional aspherical lens 1 and a spherical lens 2 called a solid immersion lens. In the case where the above optical focusing system is used as an objective lens for an optical disk 4, a slider 3 should be located between the objective lens and the disk 4 in order to load and move the objective lens thereon. The slider 3 moves the spherical lens 2 with respect to the surface of the disk 4, and maintains the distance between the spherical lens 2 and the disk 4 less than 100nm. The aspherical lens 1 refracts the laser light emitted from a light source (not shown). The spherical lens 2 focuses the laser light refracted by the aspherical lens 1 on the inner surface of the spherical lens 2 located toward the disk 4. The inner surface of the spherical lens 2 on which the laser light is focused forms a near field. As a result, information is recorded on the disk 4 or read from the disk 4, via the near field.

When a medium constituting the spherical lens 2 has a refractive index "n", an angle at which the laser light is focused on the inner surface of the spherical lens 2 becomes large, and the momentum of the laser light is reduced. As a result, an effect of reducing the wavelength of the laser light to λ/n is generated. Thus, the NA is also increased to NA/λ. Therefore, the size of the focused spot which is finally formed in the surface of the spherical lens 2 is proportional to 1/n². Accordingly, the size of the spot can be reduced using the refractive index "n" of the medium of the spherical lens 2.

However, since the optical focusing system of Figure 1 includes the aspherical lens 1 and the spherical lens 2 both of which have been separately manufactured, it is difficult to assemble and adjust the optical focusing system to have desired optical features. Since the optical focusing system needs an incident laser light having a beam diameter more than or equal to 33mm, the size of all optical components including a light receptor becomes large. It is also difficult to record or reproduce signals stably, when an incident laser beam slants away from a normal angle with respect to the optical disk due to vibration of a moving optical pickup or a rotating optical disk. The wavelength of the light from a currently available laser diode light source is about 600nm in the shortest and the NA of the objective lens is approximately 0.6. Thus, when an NA greater than or equal to 0.6 is needed, the performance of the optical pickup is very sensitive to the slant of the incident beam. As a result, it is much more difficult to use the above optical focusing system to commercialise the optical recording and reproducing apparatus.

EP 2904902 (Philips) discloses an optical scanning device having an objective lens system composes of reflectors arranged on the surface of a transparent body. Since the reflectors both focus the radiation beam and fold it within the body, a very compact write and/or read unit is obtained. The scanning device may also be given a very robust and stable form by fixing the radiation source and the detection system to the surface of the transparent body.

US 5125750 (Corle et al) discloses an optical recording system including a read/write optical assembly including an objection lens for reading or writing from an optical medium including a solid immersion lens disposed between the objective lens and having a surface closely spaced from the recording medium.

With a view to solve or reduce the above problems, it is an aim of preferred embodiments of the present invention to provide an optical pickup having a catadioptric objective lens which has an excellent performance with respect to an incident beam slant, and enables reduction of the size of a focused spot and simultaneously making optical components compact and light.

According to an aspect of the present invention, there is provided an optical pickup for recording and reproducing information on a recording medium using a near field, the optical pickup comprising: a unit for emitting laser light to a recording medium and detecting the light reflected from the recording medium; and a catadioptric objective lens including a first reflective area for reflecting the light incident from the unit, a focusing area for focusing the light incident from the unit on a focused spot, and a second reflective area for reflecting the light reflected from the first reflective area toward the focusing area, the second reflective area becoming a part of a second surface of the catadioptric objective lens located in the vicinity of the unit, wherein the unit and the catadioptric objective lens are integrated and the light from the unit is incident to the catadioptric objective lens via the portions except the second reflective area of the second surface, the optical pickup being characterised in that the near field is used such that the first reflective area and the focussing area form a first surface of the catadioptric objective lens.

Said unit may comprise: a light source; a detector for detecting the light reflected from an information recording surface recorded on the recording medium and transmitted through the catadioptric objective lens; and an optical device for adjusting an optical path so that the light emitted from the light source is directed toward the catadioptric objective lens and the light reflected from the catadioptric objective lens is directed toward the detector.

Said light source is preferably located on the optical axis of the catadioptric objective lens.

Said light source is preferably spaced apart from the unit.

Said detector is preferably spaced apart from the unit.

Said unit may comprise: a light source; a plurality of detectors for detecting the light reflected from an information recording surface on the recording medium and transmitted through the catadioptric objective lens; beam splitter means for splitting the incident light and outputting the splitted light to each of said plurality of detectors; and an optical device for adjusting an optical path so that the light emitted from the light source is directed toward the catadioptric objective lens and the light reflected from the catadioptric objective lens is directed toward the beam splitter means.

Said light source is preferably located on the optical axis of the catadioptric objective lens.

Said beam splitter means preferably is a wollaston prism.

Said light source may be spaced apart from the unit.

Said detector is preferably spaced apart from the unit.

For a better understanding of the invention, and to show how embodiments of the same may be carried into effect, reference will now be made, by way of example, to the accompanying diagrammatic drawings, in which:
Figure 1 is a view for explaining a conventional focusing optical system which generates a near field;
Figure 2 shows an optical system according to an embodiment of the present invention; and
Figure 3 shows an optical system according to another embodiment of the present invention.

Preferred embodiments of the present invention will be described with reference to the accompanying drawings.

An optical pickup system shown in Figure 2 includes a unit 20 integrated with a laser diode 21 being a light transmitter and a photodiode 23 being a light receptor and a beam splitter prism 22. A catadioptric objective lens 30 for focusing the light emitted from the laser diode 21 of the unit 20 on a disk 40 and transmitting the light reflected from the disk 40 to the unit 20 is located between the unit 20 and the disk 40. The objective lens 30 has a shape of loading the unit 20 on the opposing side of the disk.

Referring to Figure 2, the laser light emitted from the laser diode 21 of the unit 20 is transmitted via the beam splitter prism 22 and incident to the catadioptric objective lens 30 in a divergent form. In this embodiment, the unit 20 and the catadioptric objective lens 30 are fabricated using the same material of a certain refractive index. Thus, the light from the laser diode 21 is incident to the catadioptric objective lens 30, without having refracted. For convenience of explanation, it is assumed that a surface toward the disk 40 is a first surface and a surface toward the laser light source is a second surface. The catadioptric objective lens 30 includes a first reflective area 30-1 of the first surface located toward the disk 40, a focusing area on which a focused spot is formed and a second reflective area 30-2. The second reflective area 30-2 is a remaining portion except the surface contacting the unit 20 of the second surface and has an aspherical shape. The first surface of the catadioptric objective lens 30 transmits the light in only the focusing area at the centre portion of the first surface and reflects the light toward the second reflective area 30-2 of the second surface in the remaining first reflective area 30-1 except the focusing area. Thus, the laser light reflected from the first reflective area 30-1 of the first surface and the second reflective area 30-2 of the second surface is focused on the focusing area of the first surface in the form of a focused spot. The focused spot focused on the focusing area of the first surface forms a near field. Therefore, information is recorded on the portion of the disk 40 located within the distance by one wavelength of the laser light from the focusing area of the first surface and read therefrom. It is preferable that the distance between the first surface and the disk 40 is less than 100nm. The near field formed by the catadioptric objective lens 30 is altered by an information recording layer on the disk 40. The reflected light representative of alteration is reflected from the beam splitter prism 22 and is focused on the photodiode 23.

Figure 3 shows an optical system according to another embodiment of the present invention.

The optical system shown in Figure 3 is obtained by modifying the optical system shown in Figure 2 so as to be used for a magnetooptic disk. This optical system includes a wollaston prism 24 between the beam splitter prism 22 and the photodiode 25. Here, the wollaston prism 24 is a prism for separating signals from the magnetooptic disk 40-1 according to a polarization state, which is obvious to a person skilled in the art. Thus, the detailed description thereof will be omitted. The photodiode 25 of Figure 3 has a structure where two photodiodes are packaged so that two light beams separated by the wollaston prism 24 can be detected.

Since the elements of Figure 3 having the same reference numerals as those of Figure 2 perform the same functions as those of Figure 2, the detailed description thereof will be omitted. Here, the operations of the additional elements will be described below. As described above, the light emitted from the laser diode 21 is focused on the magnetooptic disk 40-1 and the light reflected from the magnetooptic disk 40-1 is incident toward the beam splitter prism 22 along the same optical path as the focusing path. The light incident to the beam splitter prism 22 is reflected therefrom, and then incident to the wollaston prism 24. The wollaston prism 24 outputs the incident light as two splitted light beams to the photodiode 25 due to the optical properties. The photodiode 25 focuses the light splitted from the wollaston prism 24 in correspondence one to one to each packaged photodiode (not shown) .

The above-described embodiments have been described with respect to only the case where the unit 20 and the objective lens 30 have the same refractive index. However, the unit 20 and the objective lens 30 can be fabricated using a respectively different material of a different refractive index. It is also possible that the laser diode 21 and the photodiode 23 in the unit 20 are attached to the beam splitter prism 22 or mounted in a separate unit both of which are spaced from a predetermined distance. Also, the above embodiments describe that the objective lens 30 functions as a slider 3 as shown in Figure 1. However, a separate slider can be located between the objective lens 30 and the disks 40 and 40-1, which implements the same function as the above.

As described above, the present invention enables the components of the optical system to be compact and light and the optical pickup to be thin, which can be used as a slim device such as a notebook computer.

While only certain embodiments of the invention have been specifically described herein, it will be apparent that numerous modifications may be made thereto within the scope of the claims.

## Claims

1. An optical pickup for recording and reproducing information on a recording medium, the optical pickup comprising:
a unit (20) for emitting laser light to a recording medium (40, 40-1) and detecting the light reflected from the recording medium (40, 40-1); and
a catadioptric objective lens (30) including a first reflective area (30-1) for reflecting the light incident from the unit (20), a focusing area for focusing the light incident from the unit (20) as a focused spot, and a second reflective area (30-2) for reflecting the light reflected from the first reflective area (30-1) toward the focusing area, the second reflective area (30-2) becoming a part of a second surface of the catadioptric objective lens (30) located in the vicinity of the unit (20), wherein the unit (20) and the catadioptric objective lens (30) are integrated and the light from the unit (20) is incident to the catadioptric objective lens (30) via the portions except the second reflective area of the second surface, the optical pickup being **characterised in that** a near field is used such that the first reflective area and the focussing area form a first surface of the catadioptric objective lens.

2. The optical pickup according to claim 1, wherein said unit comprises:
a light source (21);
a detector (23, 25) for detecting the light reflected from an information recording surface recorded on the recording medium (40) and transmitted through the catadioptric objective lens (30); and
an optical device (22) for adjusting an optical path so that the light emitted from the light source (21) is directed toward the catadioptric objective lens (30) and the light reflected from the catadioptric objective lens (30) is directed toward the detector (23).

3. The optical pickup according to claim 2, wherein said light source (21) is located on the optical axis of the catadioptric objective lens (30).

4. The optical pickup according to claim 3, wherein said light source (21) is spaced apart from the unit (20).

5. The optical pickup according to claim 3 or 4, wherein said detector (23) is spaced apart from the unit (20).

6. The optical pickup according to claim 1, wherein said unit comprises:
a light source (21);
a plurality of detectors (25) for detecting the light reflected from an information recording surface on the recording medium (40-1) and transmitted through the catadioptric objective lens (30);
beam splitter means (24) for splitting the incident light and outputting the splitted light to each of said plurality of detectors (25); and
an optical device (22) for adjusting an optical path so that the light emitted from the light source (21) is directed toward the catadioptric objective lens (30) and the light reflected from the catadioptric objective lens (30) is directed toward the beam splitter means (24).

7. The optical pickup according to claim 6, wherein said light source (21) is located on the optical axis of the catadioptric objective lens (30).

8. The optical pickup according to claim 7, wherein said beam splitter means (24) is a wollaston prism.

9. The optical pickup according to claim 8, wherein said light source (21) is spaced apart from the unit (20).

10. The optical pickup according to claim 8 or 9, wherein said detector (25) is spaced apart from the unit (20).

## Patentansprüche

1. Optischer Abnehmer zum Aufzeichnen und Wiedergeben von Informationen auf einem Aufzeichnungsmedium, wobei der optische Abnehmer umfasst:
eine Einheit (20), die Laserlicht auf ein Aufzeichnungsmedium (40, 40-1) emittiert und das von dem Aufzeichnungsmedium (40, 40-1) reflektierte Licht erfasst; und
eine katadioptrische Objektivlinse (30), die einen ersten reflektierenden Bereich (30-1), der das von der Einheit (20) auftreffende Licht reflektiert, einen fokussierenden Bereich, der das von der Einheit (20) auftreffende Licht als einen fokussierten Punkt fokussiert, sowie einen zweiten reflektierenden Bereich (30-2) umfasst, der das von dem ersten reflektierenden Bereich (30-1) reflektierte Licht auf den fokussierenden Bereich zu reflektiert, wobei der zweite reflektierende Bereich (30-2) ein Teil einer zweiten Fläche der katadioptrischen Objektivlinse (30) wird, die sich in der Nähe der Einheit (20) befindet, wobei die Einheit (20) und die katadioptrische Objektivlinse (30) integriert sind und das Licht von der Einheit (20) über die Abschnitte mit Ausnahme des zweiten reflektierenden Bereiches der zweiten Fläche auf die katadioptrische Objektivlinse (30) auftrifft, und der optische Abnehmer **dadurch gekennzeichnet ist, dass** ein Nahfeld so genutzt wird, dass der erste reflektierende Bereich und der fokussierende Bereich eine erste Fläche der katadioptrischen Objektivlinse bilden.

2. Optischer Abnehmer nach Anspruch 1, wobei die Einheit umfasst:
eine Lichtquelle (21);
einen Detektor (23, 25), der das Licht erfasst, das von einer Informationsaufzeichnungsfläche, die auf dem Aufzeichnungsmedium (40) aufgezeichnet ist, reflektiert und durch die katadioptrische Objektivlinse (30) hindurchgelassen wird; und
eine optische Vorrichtung (22), die einen optischen Weg so einstellt, dass das Licht, das von der Lichtquelle (21) emittiert wird, auf die katadioptrische Objektivlinse (30) zu gerichtet wird und das Licht, das von der katadioptrischen Objektivlinse (30) reflektiert wird, auf den Detektor (23) zu gerichtet wird.

3. Optischer Abnehmer nach Anspruch 2, wobei sich die Lichtquelle (21) auf der optischen Achse der katadioptrischen Objektivlinse (30) befindet.

4. Optischer Abnehmer nach Anspruch 3. wobei die Lichtquelle (21) von der Einheit (20) beabstandet ist.

5. Optischer Abnehmer nach Anspruch 3 oder 4, wobei der Detektor (23) von der Einheit (20) beabstandet ist.

6. Optischer Abnehmer nach Anspruch 1, wobei die Einheit umfasst:
eine Lichtquelle (21);
eine Vielzahl von Detektoren (25), die das Licht erfassen, das von einer Informationsaufzeichnungsfläche auf dem Aufzeichnungsmedium (40-1) reflektiert und durch die katadioptrische Objektivlinse (30) hindurchgelassen wird;
eine Strahlteilereinrichtung (24), die das auftreffende Licht teilt und das geteilte Licht an jeden der Vielzahl von Detektoren (25) ausgibt; und
eine optische Vorrichtung (22), die einen optischen Weg so einstellt, dass das Licht, das von der Lichtquelle (21) emittiert wird, auf die katadioptrische Objektivlinse (30) zu gerichtet wird und das Licht, das von der katadioptrischen Objektivlinse (30) reflektiert wird, auf die Strahlteilereinrichtung (24) zu gerichtet wird.

7. Optischer Abnehmer nach Anspruch 6, wobei sich die Lichtquelle (21) auf der optischen Achse der katadioptrischen Objektivlinse (30) befindet.

8. Optischer Abnehmer nach Anspruch 7, wobei die Strahlteilereinrichtung (24) ein Wollastonprisma ist.

9. Optischer Abnehmer nach Anspruch 8, wobei die Lichtquelle (21) von der Einheit (20) beabstandet ist.

10. Optischer Abnehmer nach Anspruch 8 oder 9, wobei der Detektor (25) von der Einheit (20) beabstandet ist.

## Revendications

1. Tête de lecture optique pour enregistrer et reproduire des informations sur un support d'enregistrement, la tête de lecture optique comprenant:
une unité (20) destinée à émettre une lumière laser en direction d'un support d'enregistrement (40, 40-1) et à détecter la lumière réfléchie par le support d'enregistrement (40, 40-1); et
une lentille d'objectif catadioptrique (30) comprenant une première zone de réflexion (30-1) destinée à réfléchir la lumière reçue à partir de l'unité (20), une zone de focalisation destinée à focaliser la lumière reçue à partir de l'unité (20) sous la forme d'un point focalisé, et une seconde zone de réflexion (30-2) destinée à réfléchir la lumière réfléchie par la première zone de réflexion (30-1) vers la zone de focalisation, la seconde zone de réflexion (30-2) faisant partie d'une seconde surface de la lentille d'objectif catadioptrique (30), située au voisinage de l'unité (20), dans laquelle l'unité (20) et la lentille d'objectif catadioptrique (30) sont intégrées et la lumière provenant de l'unité (20) est reçue sur la lentille d'objectif catadioptrique (30) par l'intermédiaire des parties autres que la seconde zone de réflexion de la seconde surface, la tête de lecture optique étant **caractérisée en ce qu'**un champ proche est utilisé de façon que la première zone de réflexion et la zone de focalisation forment une première surface de la lentille d'objectif catadioptrique.

2. Tête de lecture optique selon la revendication 1, dans laquelle ladite unité comprend:
une source de lumière (21);
un détecteur (23, 25) destiné à détecter la lumière réfléchie par une surface d'enregistrement d'informations enregistrée sur le support d'enregistrement (40), et transmise à travers la lentille d'objectif catadioptrique (30); et
un dispositif optique (22) destiné à ajuster un chemin optique afin que la lumière émise par la source de lumière (21) soit dirigée vers la lentille d'objectif catadioptrique (30) et que la lumière réfléchie par la lentille d'objectif catadioptrique (30) soit dirigée vers le détecteur (23).

3. Tête de lecture optique selon la revendication 2, dans laquelle ladite source de lumière (21) est située sur l'axe optique de la lentille d'objectif catadioptrique (30).

4. Tête de lecture optique selon la revendication 3, dans laquelle ladite source de lumière (21) est espacée de l'unité (20).

5. Tête de lecture optique selon la revendication 3 ou 4, dans laquelle ledit détecteur (23) est espacé de l'unité (20).

6. Tête de lecture optique selon la revendication 1, dans laquelle ladite unité comprend:
une source de lumière (21);
de multiples détecteurs (25) destinés à détecter la lumière réfléchie par une surface d'enregistrement d'informations du support d'enregistrement (40-1) et transmise à travers la lentille d'objectif catadioptrique (30);
des moyens diviseurs de faisceau (24) destinés à diviser la lumière incidente et à fournir la lumière divisée à chacun desdits multiples détecteurs (25); et
un dispositif optique (22) destiné à ajuster un chemin optique afin que la lumière émise par la source de lumière (21) soit dirigée vers la lentille d'objectif catadioptrique (30) et que la lumière réfléchie par la lentille d'objectif catadioptrique (30) soit dirigée vers les moyens diviseurs de faisceau (24).

7. Tête de lecture optique selon la revendication 6, dans laquelle ladite source de lumière (21) est située sur l'axe optique de la lentille d'objectif catadioptrique (30).

8. Tête de lecture optique selon la revendication 7, dans laquelle lesdits moyens diviseurs de faisceau (24) consistent en un prisme de Wollaston.

9. Tête de lecture optique selon la revendication 8, dans laquelle ladite source de lumière (21) est espacée de l'unité (20).

10. Tête de lecture optique selon la revendication 8 ou 9, dans laquelle ledit détecteur (25) est espacé de l'unité (20).
